Europäisches Patentamt

European Patent Office

Office européen des brevets

(19)

(11) Publication number : **0 201 655**
**B1**

(12)

# EUROPEAN PATENT SPECIFICATION

(45) Date of publication of patent specification :
30.11.88

(21) Application number : 85830163.3

(22) Date of filing : 28.06.85

(51) Int. Cl.⁴ : **B 65 D 83/14,** B 29 C 45/26,
B 29 C 45/40

(54) Integrally moulded nozzle insert for aerosol spray heads and method of making it.

(30) Priority : 21.03.85 IT 2000085

(43) Date of publication of application :
20.11.86 Bulletin 86/47

(45) Publication of the grant of the patent :
30.11.88 Bulletin 88/48

(84) Designated contracting states :
AT BE CH DE FR GB LI LU NL SE

(56) References cited :
DE-A- 1 810 329
DE-A- 1 942 022
GB-A- 1 136 127
US-A- 3 406 911
US-A- 3 537 676
US-A- 3 685 933

(73) Proprietor : SOMOVA S.p.A.
Via Palermo 31
I-20094 Buccinasco (Milano) (IT)

(72) Inventor : Ramella, Luca
Via Pisacane 16
Milano (IT)

## Description

This invention generally relates to delivery heads for containers of substances to be nebulized or sprayed, such as aerosol containers, pumping containers and the like having cap provided with a central downward discharge conduit and connected lateral conduit under the top wall of the cap and, more particularly, to a method of making a delivery head of this kind already provided with a plastic break-up insert integrally formed with and positioned in the head.

It is known that from an aerosol container or also a non pressurized container of the above mentioned type a spray is generated by acting on the valve actuator (in the case of aerosols) or on the pump actuator (in the case of containers provided with a pump) and this spray can be nebulized at the opening of the delivery outlet of the head when a break-up insert made of metal or plastic is placed in this opening, which has just the purpose to act as a restriction in order to cause a pressure drop and therefore a greater fluid rate, by letting the fluid flow to pass through suitable turbulence generating passages so as to nebulize it. Therefore, the fluid fows out of the break-up insert in the form of a more or less nebulized spray and this depending on the number of the flow passages, the turbulence generating passage cross-sections and the pressure upstream of the break-up insert.

Without this break-up insert, the nebulization can be obtained, in the case of aerosol containers, by increasing the inner pressure of the container only (which has the disadvantage of generating a very strong spray), whereas in the case of containers provided with a pump the nebulization cannot be obtained. The technology for making such break-up inserts and their correct positioning at the opening of the outlet passage of the delivery head have reached very sophisticated levels because, as already said, the break-up insert must permit a very accurate control of the fluid flow rate.

In the case of plastic break-up inserts, their manufacture is carried out separately from the delivery heads and, once the inserts have been produced, they are positioned at the outlet opening of the delivery heads later, by means of specific automatic machines which have to exhibit a high production rate and an extreme precision in the assembly step.

US-A-3 406 911 discloses a plastic delivery head for containers of substances to be nebulized of the kind referred to, wherein said head comprises a plastic break-up insert connected to said head, positioned in the outlet opening of a delivery passage provided in said head. This plastic break-up is press fitted into the outlet opening and is representative of the above mentioned prior art.

US-A-3 537 676 discloses a mold apparatus for closure with integral cap. From this reference it is well known to attach closure elements to parts of containers in an integral manner by means of a moulded appendix or strip.

GB-A-1 136 127 discloses a closure adapted to be secured to a neck of a container and having a nozzle through which the contents of the container are dispensed, wherein there is provided a sub-cap adapted to be releasably secured to the closure to close the nozzle, said sub-cap being attached with the closure through a strap.

This invention aims to obviate the above mentioned drawbacks pertaining to the prior art by providing a new method of making a delivery head of the above mentioned type with integral fastened break-up insert.

More particularly, the method of making a delivery head of the type comprising a cap having a central downward discharge conduit and connected lateral conduit under the top wall of the cap, the lateral conduit terminating outwardly in a delivery outlet in the side wall of the cap, and a break-up insert having a central orifice and being adapted to fit in mating relation with the outlet, the break-up insert being connected to the side wall of the cap at a point under the outlet by an attachment strip, the strip, the cap, and the break-up insert being integrally molded, characterized in that said method comprises the steps of :

a) molding the head in a mold in which the side of the cap on which the break-up insert is disposed in formed by a laterally moving mold die, and a movable mold fence is disposed between the said mold die and the cap, the fence and the said mold die forming between them the attachment strip and the break-up insert, the strip being molded in a position extending downward from the attachment point with the break-up insert at its lower end,

b) opening the mold after molding,

c) slightly retracting the mold fence back a short distance away from the cap after molding,

d) stripping the head out of the mold in a downward direction so that the attachment strip engages the top of the fence and pivots about the point as the head is moved downward, the break-up insert at the end of the pivoting being pressed by the fence into frictional engagement with the delivery outlet to complete the assembly.

The invention will be now described in connection with the accompanying drawings, wherein :

Fig. 1 is a cross-sectional view taken through an aerosol container cap provided with an actuating lever, at the time that the injection step of the molding operation has been carried out,

Fig. 2 is a cross-sectional view taken through the cap of Fig. 1, at the beginning of the stripping step from the mold,

Fig. 3 is a cross-sectional view taken through the cap of Fig. 1, at the end of the stripping step from the mold, and

Fig. 4 is a cross-sectional view taken through a delivery head to be applied on the valve stem of an aerosol container.

As can be seen from the drawings, the cap 1 provided with the delivery actuator 2 illustrated therein is intended to be applied on a conventional aerosol container (not shown). The actuator 2 comprises a center body 3 provided with a vertical conduit 4 and a horizontal conduit 5 communicating with the vertical conduit 4 at one end thereof and opening in the atmosphere at the other end thereof so as to form a delivery outlet 6. The vertical conduit 4 is intended to be applied on the projecting stem of a conventional aerosol valve (not shown) so that the fluid contained therein can flow, when the valve is open, from the horizontal conduit 5. In the outlet 6 of the horizontal conduit 5 an abutment surface 7 is formed, which is intended to receive the plastic break-up insert 8.

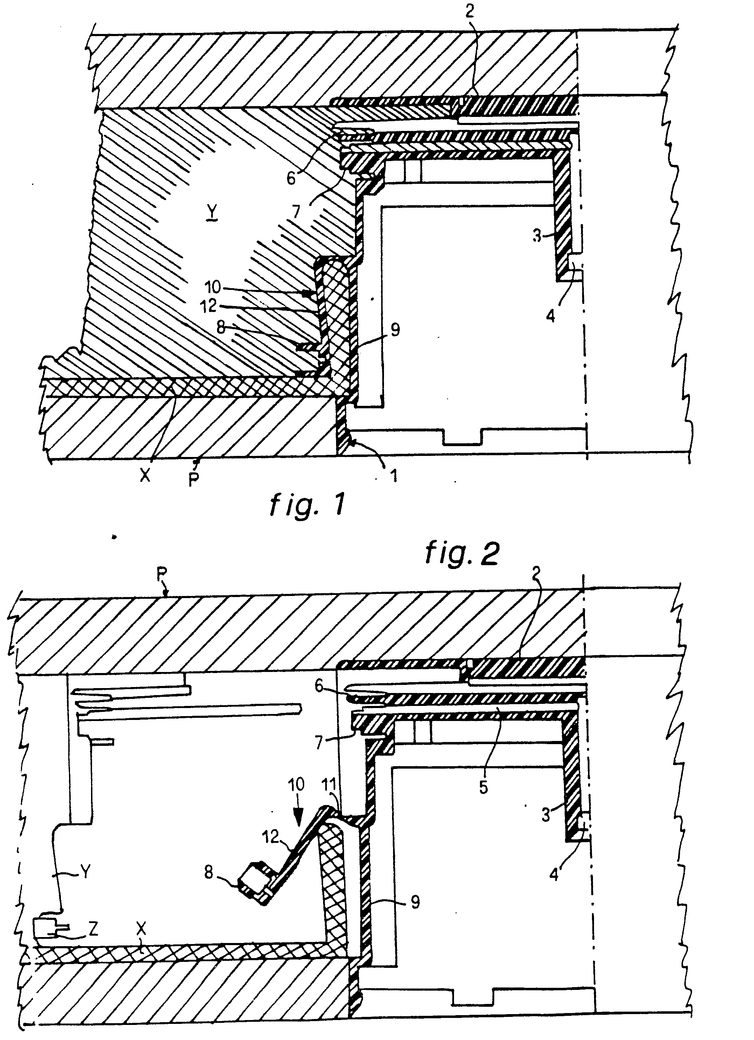

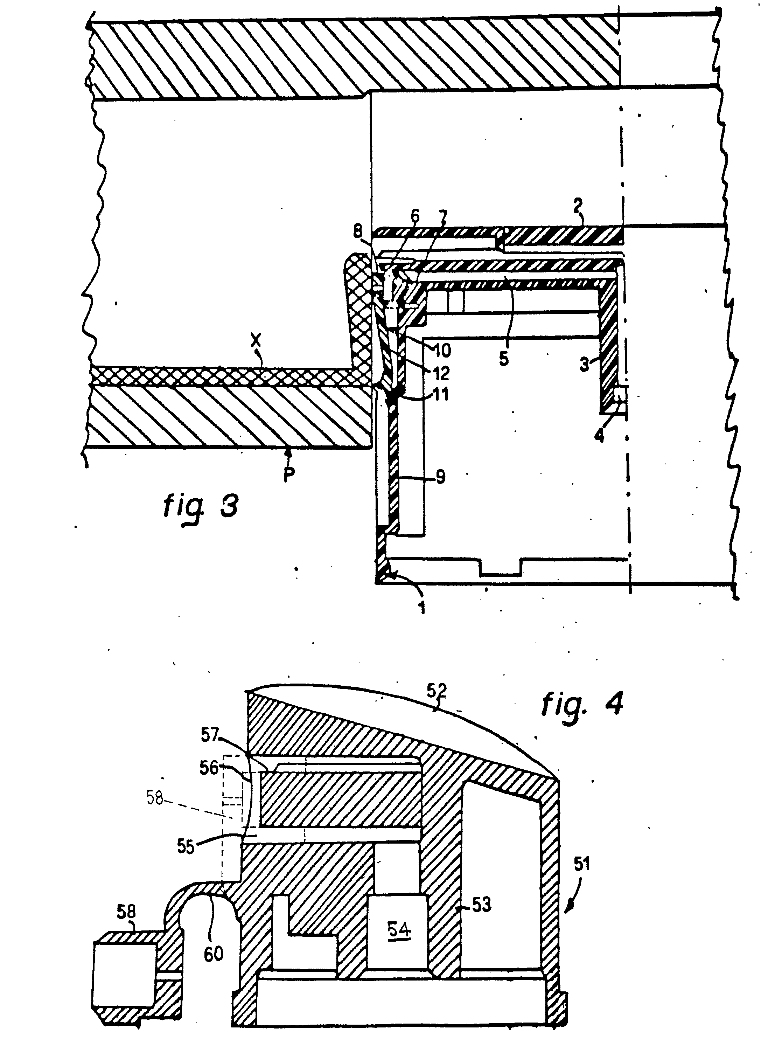

As shown in Fig. 1, illustrating the injection molding step of cap and actuator assembly 1, 2 in which the molded delivery head is still in the mold P, only the outer portions of which are shown for sake of clarity, the break-up insert 8 is integrally molded with the cap 1 by means of the L-shaped mold fence X of the conventional mold portion Y intended to mold the outlet 6 of the horizontal conduit 5 as well as the abutment surface 7 and carrying in this case the die for molding the break-up insert 8, designated by Z. Therefore, the break-up insert 8 is integrally attached to the side wall 9 of cap 1 through a strip 10 and particularly in a position beneath the delivery outlet 6 in axial alignment therewith. The attachment strip 10 as molded is formed of an arcuate portion 11 bent over by about 90° and a straight portion 12 extending parallel to the cap axis, spaced from the side wall 9 of cap a distance corresponding to the thickness of the L-shaped mold fence X. Once the cap 1 with the break-up insert 8 attached thereto through the strip 10 has been molded, the mold portion Y is retracted and the stripping step of the so formed delivery head is begun, after the mold fence X has been slightly retracted from the side wall 9 of cap 1. As can be seen from Fig. 2, during the stripping step from the mold P the cap 1 still anchored on the mold punch or male die begins to move downwards so that the mold fence X, which remains stationary, will cause the strip 10 to rotate clockwise about the fulcrum formed by the attachment point to the side wall 9 of cap 1 until the break-up insert 8 is placed in front of the outlet 6 of the delivery conduit 5. At this point, as can be seen from Fig. 3, as the stripping of cap 1 from the mold continues, the mold fence X presses the break-up insert into the outlet 6 so that the insert is placed on the abutment surface 7 which causes the break up insert 8 to assume the correct position of nebulization. Then, the cap so provided with the break-up insert integrally molded therewith gets out of the mold, is released from the punch or male die and is stored for the future use.

Fig. 4 shows as an alternative a delivery head for aerosol containers or containers provided with pumping means, which head has been obtained following the teachings of the present invention. The delivery head generally designated by 51 has a slightly concave upper surface 52 for receiving a user finger and a body 53 provided with the vertical conduit 54 communicating with the horizontal delivery conduit 55 opening outwardly through an outlet opening 56 provided with an abutment surface 57 for receiving the break-up insert 58. The latter is integrally attached to the body 53 of the delivery head 51 through a strip 60 which is similar to the strip 10 of Figs. 1, 2 and 3 and accomplishes the same function so that, once the delivery head 51 has been stripped from the mold P, the break-up insert 58 will be correctly housed in the outlet opening 56 and pressed the abutment surface 57. Thereafter, the delivery head 51 is ready to be used.

From the foregoing, the great utility of the delivery head obtained in accordance with the present invention will be readily apparent, since it does not require any expensive machine for applying the break-up insert. Another great advantage resides in the fact that the proper break-up insert is associated to each delivery head and therefore there is not the need of providing sorting operations and possible other adjustment steps of the break-up insert.

While a preferred embodiment of the present invention has been illustrated and described in the foregoing, it should be understood that various changes and modifications can be made thereto by those skilled in the art without departing from the scope of the present invention as defined by the appended claims.

## Claims

1. Method of making a delivery head for containers of substances to be nebulized, of the type comprising a cap having a central downward discharge conduit and connected lateral conduit under the top wall of the cap, the lateral conduit terminating outwardly in a delivery outlet in the side wall of the cap, and a plastic break-up insert having a central orifice and being adapted to fit in mating relation with the outlet, the break-up insert being connected to the side wall of the cap at a point under the outlet by an attachment strip, the strip, the cap, and the break-up insert being integrally molded, characterized in that said method comprises the steps of :

a) molding the head in a mold in which the side of the cap on which the break-up insert is disposed in formed by a laterally moving mold die, and a movable mold fence is disposed between the said mold die and the cap, the fence and the said mold die forming between them the attachment strip and the break-up insert, the strip being molded in a position extending downward from the attachment point with the break-up insert at its lower end,

b) opening the mold after molding,

c) slightly retracting the mold fence back a short distance away from the cap after molding,

d) stripping the head out of the mold in a downward direction so that the attachment strip engages the top of the fence and pivots about the point as the head is moved downward, the break-up insert at the end of the pivoting being pressed by the fence into frictional engagement with the delivery outlet to complete the assembly.

2. A method as claimed in claim 1, characterized in that the said mold fence is an L-shaped element.

3. A method as claimed in claim 1, characterized in that the break-up insert is cup-shaped and the delivery outlet is formed with an outward projection which receives the opening of the break-up insert.

**Patentansprüche**

1. Verfahren zur Herstellung eines Sprühkopfes für Behälter für zu versprühende Stoffe von der Art bestehend aus einer Kappe mit einem nach unten gerichteten mittleren Abgabekanal und einem damit verbundenen seitlichen Kanal unterhalb der oberen Kappenwand, wobei der seitliche Kanal nach außen in eine Auslaßöffnung in der Seitenwand der Kappe mündet, und einem Kunststoff-Düseneinsatz mit einer zentralen Öffnung und zur Anpassung an den Auslaß geeignet, wobei der Düseneinsatz mit der Seitenwand der Kappe an einer Stelle unterhalb dem Auslaß durch einen Befestigungsstreifen verbunden ist, wobei der Streifen, die Kappe und der Düseneinsatz in einem Stück geformt sind, dadurch gekennzeichnet, daß dasselbe folgende Stufen umfaßt :

a) Formen des Kopfes in einer Form, in welcher die Kappenseite, an der der Düseneinsatz angeordnet ist, durch eine sich seitlich bewegende Matrize gebildet ist, und ein bewegliches Formführungselement ist zwischen der Matrize und der Kappe angeordnet, wobei das Führungselement und die Matrize den Befestigungsstreifen und den Düseneinsatz zwischen sich bilden, wobei der Streifen in einer von dem Befestigungspunkt sich nach unten erstreckenden Stelle, mit dem Düseneinsatz an seinem unteren Ende, geformt wird ;

b) Öffnen der Form nach dem Formungsvorgang ;

c) nach dem Formen ein leichtes Zurückziehen von der Kappe des Führungselementes für eine kurze Strecke ;

d) Herausnehmen des Kopfes nach unten aus der Form, so daß der Befestigungsstreifen in das obere Ende des Führungselements eingreift und sich um die Spitze des Führungselements dreht, wenn der Kopf nach unten bewegt wird, wobei der Düseneinsatz am Ende der Drehbewegung von dem Führungselement reibungsschlüssig in die Auslaßöffnung, zur Vervollständigung des Gesamten, gepresst wird.

2. Verfahren nach Anspruch 1, dadurch gekennzeichnet, daß das Führungselement der Form ein L-förmiges Element ist.

3. Verfahren nach Anspruch 1, dadurch gekennzeichnet, daß der Düseneinsatz tassenförmig ist und die Auslaßöffnung mit einem äußeren Vorsprung gebildet ist, der die Öffnung des Düseneinsatzes aufnimmt.

**Revendications**

1. Procédé pour réaliser une tête de spray pour des récipients de substances à nébuliser du type comportant un capuchon ayant un conduit de décharge central vers le bas et un conduit latéral relié au premier au-dessous de la paroi supérieure du capuchon, le conduit latéral terminant extérieurement dans une sortie de spray dans la paroi latérale du capuchon, et une insertion d'embouchure en plastique ayant un orifice central et désigné à s'épouser avec la sortie de spray, l'insertion d'embouchure étant relié à la paroi latérale du capuchon dans un point au-dessous de la sortie de spray par une bande de fixation, la bande, le capuchon et l'insertion d'embouchure étant moulés en une seule pièce, caractérisé en ce que ledit procédé comporte les phases de :

a) moulage de la tête dans un moule, dans lequel le côté du capuchon sur lequel est disposé l'insertion d'embouchure, est formé par une matrice, qui se déplace latéralement, et un élément de guide du moule est disposé entre ladite matrice et le capuchon, ledit élément de guide et ladite matrice formant entre eux la bande de fixation et l'insertion d'embouchure, la bande étant moulée dans une position qui s'étend vers le bas du point de fixation, avec l'insertion d'embouchure sur son extrémité inférieure ;

b) ouverture du moule après le moulage ;

c) rétraction légère de l'élément de guide du moule d'une courte distance du capuchon, après le moulage ;

d) extraction de la tête du moule dans une direction vers le bas de façon que la bande de fixation s'engage avec l'extrémité supérieure de l'élément de guide et pivote autour de la pointe de l'élément de guide quand la tête est mue vers le bas, l'insertion d'embouchure, à la fin du pivotement, étant pressée par l'élément de guide en engagement à friction avec ladite sortie pour compléter l'ensemble.

2. Procédé selon la revendication 1, caractérisé en ce que ledit élément de guide du moule est un élément en L.

3. Procédé selon la revendication 1, caractérisé en ce que l'insertion d'embouchure est en forme de coupelle et la sortie de spray est formée avec une pièce saillante vers l'extérieur, qui reçoit l'ouverture de l'insertion d'embouchure.

0 201 655

fig. 1

fig. 2

1

fig. 3

fig. 4